# EUROPEAN PATENT SPECIFICATION

(11) **EP 0 528 682 B1**
(45) Date of publication and mention of the grant of the patent: **26.11.1997**
(21) Application number: 92307565.9
(22) Date of filing: 19.08.1992
(51) Int. Cl.: B01D 46/52, B01D 29/00, B29C 53/28, B31D 5/04

(54) **Process for manufacturing a filter and apparatus for carrying out the process**
Verfahren zur Herstellung eines Filters und Vorrichtung zur Durchführung des Verfahrens
Procédé pour la fabrication d'un filtre et dispositif effectuer ladite fabrication

(30) Priority: 20.08.1991 JP 207896/91
(43) Date of publication of application: 24.02.1993
(73) Proprietor: MITSUI PETROCHEMICAL INDUSTRIES, LTD., Tokyo 100 (JP)
(72) Inventor: Mito, Masayuki, c/o Mitsui Petrochem. Co., Ltd, Kuga-gun. Yamaguchi-ken (JP); Yuasa, Haruo, c/o Mitsui Petrochem. Co., Ltd, Kuga-gun, Yamaguchi-ken (JP); Iidera, Masayoshi, Hiroshima-shi, Hiroshima-ken (JP)
(74) Representative: Senior, Alan Murray

(56) References cited:
- EP-A- 0 398 459
- CH-A- 213 471
- DE-A- 2 304 882
- DE-A- 3 723 757
- US-A- 3 679 057
- US-A- 3 870 495

## Description

This invention relates to a method and a device for manufacturing a filter for use in cleaning air and collecting or removing dusts contained in the air for filtering and collecting the dusts to separate them from the air.

There are widely used, as a filter, those manufactured by bending a sheet (monolayer sheet) or a composite sheet composed of a laminate of at least two said monolayer sheets in the form of a pleat, which laminating sheet in made of various fiber materials such as same or different natural fibers, synthetic fibers, and glass fibers.

The above filter is designed for filtering and collecting fine dusts contained in the air due to mechanical functions, such as inertia, diffusion, gravity and shut-off by passing the air through the filter in a direction substantially perpendicular to the filter material.

In the case of an electret (dielectric) filter, the filtering and collecting are further due to electrostatic attraction to the dusts. In general, the composite sheet is often used as a filter material.

Various composing techniques are applied for laminating the monolayer sheets with each other. These techniques include, for example, a laminating method with an adhesive, an ultrasonic or a fusion welding method using a thermo-embossing machine or an extreme infrared radiation heater.

With the composite sheet made in a pleat-like shape, it is possible to make a filter having relatively larger area for filtration. In addition, the pleat filter has less air-permeating resistance and can improve dust-collecting capacity and lifetime. On the contrary, a conventional filter material composed of a composite sheet, which is manufactured by laminating monolayer sheets with an ultrasonic or a fusion welding, is fusion-welded over at least a part of the filter material and the welded portion and the adjacent portion the thereto are not a fiber-like or has a fiber structure of usually high density, resulting in decreasing the effective filtration area of the filter material and in losing a loft to thereby affect unfavorably on filtering properties such as air-permeating resistance and lifetime. Particularly, the filtering properties of the electret filter are more unfavorably affected by the conventional method since, in the case of composing the monolayer sheets by the fusion welding method to laminate the same, the electric charge of the electret of the filter material is reduced due to the heat of the fusion. The electret charge (the electric charge of the electret) may be extinguished depending on the extent of the heating temperature or heating time or the synergistic effect thereof. For example, the electret charge of a composite sheet composed of a non-woven fabric sheet, which is formed from a normal resin, is substantially extinguished at the welded portion thereof.

In the case of composing the monolayer sheets using an adhesive to laminate the same, the air permeability of the filter is reduced at an adhesive-bonded portion, resulting in the deterioration of the filtering properties. Further, in the electret filter, the electret charge is neutralized with the adhesive itself or a solvent contained therein to be reduced or extinguished.

EP-A-0 398 459 discloses an arrangement in which two scoring rollers comprise heatable and differently shaped scoring elements. Two circumferential scoring rings are located on the cylindrical surfaces of each scoring roller. In addition, four scoring bars are located on each roller, the scoring bars being positioned parallel to the rotational axis of the scoring roller and at right angles to the scoring bars. In operation, these scoring rings and scoring bars form both longitudinal and lateral weld lines on the filter. These mutually perpendicular weld lines are referred to as being necessary to improve both the lateral and longitudinal rigidity of the filter. The filter is then subsequently bent along the lateral welds to form a zigzag shape.

CH-A-213 471 discloses a device in which a pair of star-shaped gear type ribbed rollers are provided. The rollers are provided with ribs, with valleys formed therebetween. The ribs of one roller engage with the valleys of the other roller and vice-versa. In use, the rollers are rotated so that the extreme tips of the ribs contact the absolute bases of the valleys. Heaters are provided on the extreme tips of the ribs and/or at the bases of the valleys.

According to one aspect of the present invention there is provided a method of manufacturing an electret filter comprising a composite filter material sheet bent in the form of a zigzag, the method comprising the following steps:
(a) superimposing at least two filter material sheets, at least one of which is an electret filter material sheet;
(b) bending the superimposed filter material sheets into the form of a zigzag including bent portions and, from the inner sides of the bent portions, simultaneously heating and fusion-welding together only the bent portions of the superimposed sheets; and
(c) subsequently further bending the superimposed filter material sheets into a denser zigzag and heating, from the outer sides of the bent portions, only the bent portions of the superimposed sheets, whereby to hold the form of the zigzag.

According to a further aspect of the present invention there is provided a device for manufacturing a filter, comprising:
(a) superimposing and feeding means for superimposing at least two monolayer sheets to form a composite sheet comprised of a laminate of said sheets and for feeding the composite sheet along a feed path in a predetermined direction;
(b) heating and bending means comprising a pair of star-shaped gear type ribbed rollers including ribs with valleys formed therebetween and heaters provided at the front ends of the ribs, said rollers being positioned on opposite sides of the feed path to engage their ribs, in use, through the fed composite sheet, whereby to bend the fed composite sheet into the form of a Zigzag and simultaneously to heat only the bent portions of the sheet from the inside of the bends to linearly weld the sheets together and to transfer the bent and heated composite sheet along said feed path in said predetermined direction;
(c) bending means comprising a star-shaped gear type ribbed roller positioned downstream of the heating and bending means for further bending the bent and heated composite sheet into the form of a zigzag and transferring it further along said feed path in said predetermined direction; and
(d) heating means downstream of the bending means and comprising a pair of heating plates, said plates of said pair being positioned on opposite sides of said sheet path to heat linearly the bends of the composite sheet only from the outer side thereof to fusion-weld the monolayer sheets together only at the bends.

In one preferred arrangement the heating and bending means are positioned on both sides of the sheet path and are arranged to move towards and away from the sheet path both to bend and weld the bent portions in one operation. In this arrangement, the heating and bending means may comprise a pair of star-shaped gear type ribbed rollers positioned on opposite sides of the sheet path to engage with each other through the composite sheet, the depth or height of the gear portions of the rollers being equal to a bent width between one bent portion and an adjacent bent portion and at least the front ends of the ribs of the gear portions of the rollers being provided with heaters.

In an alternative preferred method the bending means are positioned on both sides of the sheet path and are arranged to move towards and away from the sheet path to bend the sheet in the form of a zigzag having a predetermined bent width between adjacent bent portions and the heating means comprise a pair of heaters positioned on both sides of the sheet path to heat selectively and linearly the bent portions of the composite sheet from the outer side thereof in a direction of thickness through the sheet.

Embodiments of the present invention will now be described, by way of example only, with reference to the accompanying drawings.

### Brief Description of the Drawings

Fig. 1 is a schematic view of a filter manufacturing device according to the present invention;
Fig. 2 is a perspective view of a filter according to the present invention; and
Fig. 3 is a schematic view of a device for use in testing the pressure loss and the collecting efficiency.

The filter made according to the process and with the device of the present invention does not decrease the effective filtering area in the form of a pleat since the filter is fusion-welded only at the top portions of the mountains and the bottom portions of the valleys both of which portions does not substantially affect on the filtering area. Thus, the filter can decrease the air-permeating resistance with preventing deterioration of the collecting capacity. Further, by not bonding portions other than the top and bottom portions, a considerable amount of voids may be generated between the filter material sheets to increase the storage capacity of the filter material sheets for dusts.

In addition, in the case of the electret filter material, it can minimize a heat-hysteresis so as to hold high filtering properties.

There are various devices for manufacturing the filter in accordance with the method of the present invention. In one preferred embodiment, the device comprises feeding means for feeding a composite sheet comprised of a laminate of at least two filter material sheets in a predetermined direction, and heating and bending means positioned on both side of the fed composite sheet for heating the composite sheet by means of rod, for example, wedge-shaped heater while advancing and retreating toward the composite sheet to bend the same in the form of a pleat. In the device of this type, the heating and bending means advances toward the composite sheet to bend the same in the form of a pleat while heating selectively and linearly the bent portions corresponding to both the top portions of the mountains and the bottom portions of the valleys of the composite sheet in a direction of thickness from the inner side there of to thereby fusion-weld the bent portions.

In another preferred embodiment of device operable in accordance with the method of the present invention, the device comprises feeding means for feeding the composite sheet in a predetermined direction and, as heating and bending means, a pair of star-shaped gear type rolls (ribbed rolls) positioned on both sides of the fed composite sheet so as to be opposed and engaged with each other through the composite sheet, the depth or height of the gear portion of said roll being identical to the bent width between one bent portion and the adjacent bent portion thereto and at least the front end of the gear portion of said roll being heated, for example, by a heater provided in the roll. The device of this type bends the composite sheet in the form a pleat while heating selectively and linearly the bent portions, namely both the top portions of the mountains and the bottom portions of the valleys from the inner side of the composite sheet to fusion-weld the same with the heated front end of the gear by rotating the rolls.

In still another embodiment of device operable in accordance with the method of the present invention, the device comprises feeding means for feeding the composite sheet in a predetermined direction; bending means, for example, rod or wedge-shaped bending means and star-shaped gear roll (ribbed roll) type bending means in which the gears rotates engaged with each other, positioned on both sides of the composite sheet for advancing and retreating toward the composite sheet to bend the same in the form of a pleat; and heating means positioned on the bent composite sheet having a pleat of a predetermined width for heating the bent portions, namely both the top portions of the mountains and the bottom portions of the valleys from the outer side of the laminate to thereby fusion-weld the bent portions.

In the device of the present invention, heating and bending means are provided. At least the front ends of the heating and bending means are heated, which front ends contact the composite sheet when the heating and bending means is advanced. In this case, the bent portions of the bent composite sheet are first heated and fusion-welded from the inner side of the bends. They are then subsequently heated and fusion-welded from the outer side thereof by heating means, whereby the adhesion of the welded portions are improved.

In the device of the present invention, preferably the heating means are positioned at a distance corresponding to the bent width of a pleat. The bent composite sheet having a predetermined bent width is passed through or pushed between the heating means, whereby the bent portions of the composite sheet are heated and fusion-welded.

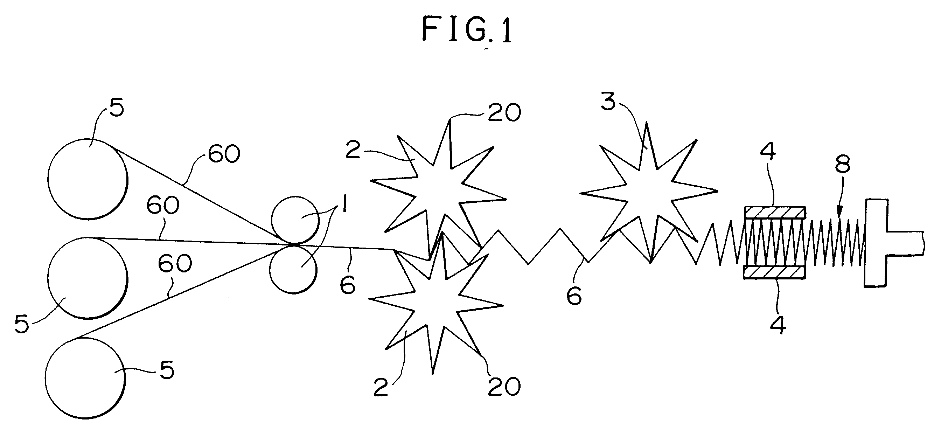

However, in the case of composing electret filter material sheets and bending the resulting electret composite sheet to pleat the same, the above-mentioned heating means used in the device should be set at temperatures such that the electret charge of the electret composite sheet does not reduce or extinguish. Referring to Fig. 1, an example of filter manufacturing device according to the present invention comprises pinch rolls 1,1; star-shaped gear-like ribbed rolls 2,2 in which the gears are engaged with each other and have a depth or height slightly larger than the bent width (the width of bent portions) of the pleat of a composite sheet 6 composed of a laminate of filter material sheets 60; a star-shaped gear type bending roll 3 for bending the composite sheet 6 in the form of a pleat; and heating plates 4,4 positioned, opposed with each other, at a distance corresponding to the bent width, the ribbed rolls 2,2 and the heating plates 4,4 being respectively designed to be heated at temperatures suitable to fusion-weld the composite sheet 6 by means of steam, heated oil or electric heater.

The device of the present invention is constituted as above, in which a process for composing filter material sheets and a process for bending the composite sheet in the form of a pleat are carried out as follows:

The filter material sheets 60, 60, 60 each are fed from reels 5,5,5, respectively, by means of the pinch rolls 1,1. The fed filter material sheets are laminated with each other to produce a composite sheet 6. The composite sheet 6 is sent to ribbed rolls 2,2, where the composite sheet 6 is linearly heated and fusion-welded at the front ends 20, 20 of the gears of the ribbed rolls 2,2 in a direction perpendicular to the sending direction of the composite sheet 6. Then, the composite sheet 6 from the ribbed rolls 2,2 is further bent by the bending roll 3 and pushed between the heating plates 4,4, where the bent portions of the composite sheet 6 are linearlyheated and fusion welded from the outer side thereby and then are pushed out continuously from the heating plates 4,4.

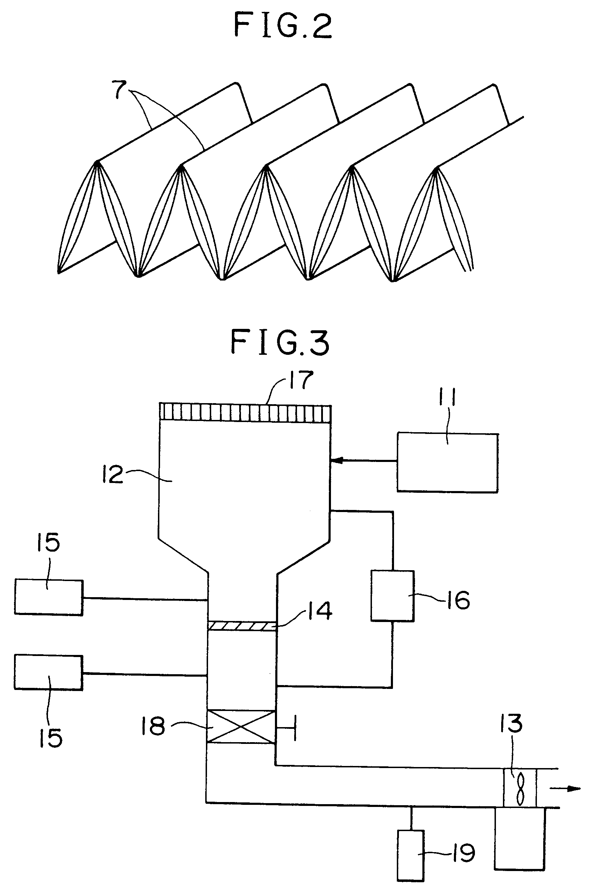

Referring now to Fig. 2, a filter 8 is shown which is manufactured by using the above mentioned device in which 7 denotes the welded portions.

### EXAMPLE

An electret filter material sheet A prepared by means of a melt-blowing method was applied to the device illustrated in Fig. 1 at a temperature of the ribbed rolls 2 of 80°C and a temperature of the heating plates 4 of 100°C . The electret filter material sheet A ws interposed between other filter material sheets B obtained by means of a span bonding method. The sheets B have a low fusion point and high rigidity. These sheets were laminated as a three-layered structure to obtain a composite pleat filter of 30mm in height and 5mm in pitch.

### Comparative Example

A composite sheet was prepared in the same manner as described in Example with the filter material sheets A and B, laminated as a three-layered structure. The laminating was made by using an ultrasonic wave. Then, the same pleat filter as Example was made without using the heating plates 4. The ribbed rolls 2 were used only for sending the sheet without heating the same.

The result is shown below.

**TABLE 1**

| LIFETIME | PRESSURELOSS (mmH2O) | COLLECTING EFFICIENCY | |
|---|---|---|---|
| | | (%) | (Hr) |
| Example | 2.4 | 75 | 512 |
| Comparative Example | 3.8 | 57 | 395 |

The collecting efficiency and the pressure loss were obtained in a manner described below by using a device illustrated in Fig. 3.

Particles of NaCl were supplied from an aerosol generator 11 (available from Nippon Kagaku Kogyo Co., Ltd.) to a chamber 12 with a purified air. The diameter of the particles was 0.3 µ .

A blower 13 was operated after the contents of the chamber 12 had a constant concentration of 2 to 6 x 10⁶ per CF. When the particle velocity was constant at 50cm per second, the concentration of the NaCl particle was determined at the upstream and downstream of an electret filter 14. The determination of the particle concentration was made by using the particle counter KC-OIB15 sold by Rion Corporation. The collecting efficiency E was calculated according to the following equation 1.$\text{Collecting efficiency =(1-Cout/Cin) x 100 (%)}$

In addition, the pressure loss Δ P was determined at the upstream and downstream of the filter 14 at the velocity 50cm per second by using an electronic differential pressure counter sold by Yamatake-Hanewell Co., Ltd.

The lifetime was determined by an accelerated testing with the fly ash (the particle diameter of 3 to 5 µ).

In Fig. 3, reference numerals 17 and 18 represent a clean air filter and an air flow adjusting valve, respectively. In addition, a reference numeral 19 represents an anemometer.

As mentioned above, the filter composed of a composite sheet is fusion-welded only at the tops of the mountains and the bottoms of the valleys of the bent portions thereof on which an effective filtering area is not substantially affected. Thus, the filter can decrease the air-permeating resistance without preventing deterioration of the collecting capacity. Further, an air-containing layer (void) between each laminated portions other than the bent portions contributes to increasing the collecting capacity and lifetime of the filter.

In addition, in the case of the electret filter material, it can minimize a heat-hysteresis so as to hold high filtering properties.

According to the filter manufacturing device, in which heating means can used also as bending means, or the filter manufacturing device having a star geared roll that acts as the heating portion, it is possible to simultaneously carry out a process for composing filter material sheets, and a process for bending the resulting composite sheet in the form of a pleat. According to the filter manufacturing device including bending means and heating means, it can continuously carry out the manufacture of the filter in a series of processes to thereby improve working efficiency and decrease manufacturing cost.

In case of the latter device in which bending means can use also as heating means, both the top portions of the mountains and the bottom portions of the valleys of the composite sheet are heated and fusion-welded from the inner and outer sides thereof whereby the adhesion the welded portions are improved. Additionally, in the latter device in which heating plates are used as the heating means, the structure of the device is simplified since the heating plates are simply fixed and the bent portions are securely fusion-welded since the heating plates functions as a guide for the pleated composite sheet.

As is apparent from the drawings, the sheets are more correctly bent in the form of a zigzag, rather than in the form of a pleat, in that adjacent zigzags are not gathered and secured together along an edge.

## Claims

1. A method of manufacturing an electret filter comprising a composite filter material sheet (6) bent in the form of a zigzag, the method comprising the following steps:
(a) superimposing at least two filter material sheets (60), at least one of which is an electret filter material sheet;
(b) bending the superimposed filter material sheets into the form of a zigzag including bent portions (7) and, from the inner sides of the bent portions, simultaneously heating and fusion-welding together only the bent portions of the superimposed sheets (60); and
(c) subsequently further bending the superimposed filter material sheets (60) into a denser zigzag and heating, from the outer sides of the bent portions, only the bent portions (7) of the superimposed sheets, whereby to hold the form of the zigzag.

2. A method as claimed in claim 1, wherein the composite filter material sheet (6) is fed along a sheet path, in a predetermined direction, and in step (c) the further bending is performed by bending means (3) positioned upstream in the sheet path of means (4) for heating the outer sides of the bent portions (7).

3. A device for manufacturing a filter (8), comprising:
(a) superimposing and feeding means (1) for superimposing at least two monolayer sheets (60) to form a composite sheet (6) comprised of a laminate of said sheets (60) and for feeding the composite sheet (6) along a feed path in a predetermined direction;
(b) heating and bending means (2) comprising a pair of star-shaped gear type ribbed rollers (2) including ribs with valleys formed therebetween and heaters provided at the front ends (20) of the ribs, said rollers (2) being positioned on opposite sides of the feed path to engage their ribs, in use, through the fed composite sheet (6), whereby to bend the fed composite sheet into the form of a zigzag and simultaneously to heat only the bent portions (7) of the sheet from the inside of the bends to linearly weld the sheets (60) together and to transfer the bent and heated composite sheet (6) along said feed path in said predetermined direction;
(c) bending means comprising a star-shaped gear type ribbed roller (3) positioned downstream of the heating and bending means (2) for further bending the bent and heated composite sheet (6) into the form of a zigzag and transferring it further along said feed path in said predetermined direction; and
(d) heating means downstream of the bending means (3) and comprising a pair of heating plates (4), said plates (4) of said pair being positioned on opposite sides of said sheet path to heat linearly the bends of the composite sheet (6) only from the outer side thereof to fusion-weld the monolayer sheets (60) together only at the bends.

4. A device as claimed in claim 3, wherein the valley depth or rib height of the rollers (2) is equal to a bent width between one bent portion and an adjacent bent portion of the welded composite sheet.

## Patentansprüche

1. Verfahren zum Herstellen eines Elektretfilters mit einer Verbundfiltermaterialfolie (6), die in der Form eines Zickzacks gebogen wird, wobei das Verfahren die folgenden Schritte umfaßt:
(a) Übereinanderlegen zumindest zweier Filtermaterialfolien (60), von denen zumindest eine eine Elektretfiltermaterialfolie ist;
(b) Biegen der übereinandergelegten Filtermaterialfolien in die Form eines Zickzacks, der gebogene Teile (7) einschließt, und gleichzeitiges Heizen, von den Innenseiten der gebogenen Teile aus, und miteinander Verschweißen nur der gebogenen Teile der übereinandergelegten Folien (60) mit dem Schmelzschweißverfahren; und
(c) nachfolgendes weiteres Biegen der übereinandergelegten Filtermaterialfolien (60) in einen kompakteren Zickzack und Heizen, von den Außenseiten der gebogenen Teile aus, nur der gebogenen Teile (7) der übereinandergelegten Folien, um dadurch die Form des Zickzacks zu halten.

2. Verfahren nach Anspruch 1, bei dem die Verbundfiltermaterialfolie (6) entlang einem Folienweg in einer vorbestimmten Richtung zugeführt wird und in Schritt (c) das weitere Biegen durch eine Biegeeinrichtung (3) durchgeführt wird, die stromaufwärts in dem Folienweg einer Einrichtung (4) zum Heizen der Außenseiten der gebogenen Teile (7) positioniert ist.

3. Vorrichtung zum Herstellen eines Filters (8) mit:
(a) einer Übereinanderlege- und Zufuhreinrichtung (1) zum Übereinanderlegen zumindest zweier Monoschichtfolien (60), um eine Verbundschicht (6) zu bilden, die aus einem Laminat der Folien (60) besteht, und zum Zuführen der Verbundfolie (6) entlang einem Zufuhrweg in einer vorbestimmten Richtung;
(b) einer Heiz- und Biegeeinrichtung (2) mit einem Paar sternförmiger zahnradartiger Rippenwalzen (2), die Rippen mit dazwischen ausgebildeten Tälern enthalten, und Heizvorrichtungen, die an den Vorderenden (20) der Rippen vorgesehen sind, wobei die Walzen (2) auf gegenüberliegenden Seiten des Zufuhrweges positioniert sind, um ihre Rippen im Einsatz durch die zugeführte Verbundfolie (6) in Eingriff zu bringen, um dadurch die zugeführte Verbundfolie in die Form eines Zickzacks zu biegen und gleichzeitig nur die gebogenen Teile (7) der Folie von der Innenseite der Biegungen aus zu heizen, um die Folien (60) miteinander linear zu verschweißen und die gebogene und geheizte Verbundfolie (6) entlang dem Zufuhrweg in der vorbestimmten Richtung zu befördern; und
(c) Biegeeinrichtung mit einer sternförmigen zahnradartigen Rippenwalze (3), die stromabwärts der Heiz- und Biegeeinrichtungen (2) positioniert ist, um die gebogene und geheizte Verbundfolie (6) weiter in die Form eines Zickzacks zu biegen und sie weiter entlang dem Zufuhrweg in der vorbestimmten Richtung zu befördern; und
(d) Heizeinrichtung, stromabwärts der Biegeeinrichtung (3) und mit einem Paar Heizplatten (4), wobei die Platten (4) des Paars auf gegenüberliegenden Seiten des Folienweges positioniert sind, um die Biegungen der Verbundfolie (6) nur von deren Außenseite aus linear zu heizen, um die Monoschichtfolien (60) nur an den Biegungen mit dem Schmelzschweißverfahren miteinander zu verschweißen.

4. Vorrichtung nach Anspruch 3, bei der die Taltiefe oder Rippenhöhe der Walzen (2) gleich einer Biegebreite zwischen einem gebogenen Teil und einem benachbarten gebogenen Teil der geschweißten Verbundfolie ist.

## Revendications

1. Procédé de fabrication d'un filtre à électret comprenant une feuille de matière filtrante composite (6) pliée sous une forme en accordéon, ce procédé comprenant les étapes suivantes consistant à:
(a) superposer au moins deux feuilles (60) de matière filtrante dont l'une au moins est une feuille de matière filtrante du type électret;
(b) plier les feuilles de matière filtrante superposées sous une forme en accordéon comprenant des parties formant plis (7) et, depuis les côtés intérieurs des plis, chauffer et souder par fusion, de façon simultanée, uniquement les plis des feuilles superposées (60); et
(c) ensuite plier encore sous une forme en accordéon plus dense les feuilles de matière filtrante superposées (60) et chauffer, depuis les côtés extérieurs des plis, uniquement les plis (7) des feuilles superposées, de manière à maintenir ainsi la forme en accordéon.

2. Procédé selon la revendication 1, dans lequel on fait avancer la feuille de matière filtrante composite (6) le long d'un trajet de feuille, dans une direction prédéterminée, et au cours de l'étape (c) on effectue le pliage supplémentaire à l'aide de moyens de pliage (3) placés dans le trajet de feuille en amont des moyens (4) servant à chauffer les côtés extérieurs des plis (7).

3. Dispositif pour fabriquer un filtre (8), comprenant:
(a) des moyens de superposition et d'avance (1) servant à superposer au moins deux feuilles monocouches (60) pour former une feuille composite (6) constituée d'un stratifié desdites feuilles (60) et à faire avancer la feuille composite (6) le long d'un trajet d'avance dans une direction prédéterminée;
(b) des moyens de chauffage et de pliage (2) comprenant une paire de rouleaux dentés (2) du type roue étoilée, comprenant des dents avec des vallées, formées entre ces dents, et des éléments de chauffage disposés aux extrémités avant (20) des dents, lesdits rouleaux (2) étant placés sur les côtés opposés du trajet d'avance pour que leurs dents s'interpénètrent, pendant le fonctionnement, transversalement à la feuille composite avancée (6), de manière à plier ainsi sous une forme en accordéon la feuille composite avancée et, de façon simultanée, chauffer uniquement les plis (7) de la feuille depuis l'intérieur des plis afin de souder linéairement les feuilles (60) les unes aux autres et transférer la feuille composite pliée et chauffée (6) le long dudit trajet d'avance dans ladite direction prédéterminée;
(c) des moyens de pliage comprenant un rouleau denté (3), du type roue étoilée, disposés en aval des moyens de chauffage et de pliage (2) pour plier encore en accordéon la feuille composite (6) pliée et chauffée et la transférer encore le long dudit trajet d'avance dans ladite direction prédéterminée; et
(d) des moyens de chauffage disposés en aval des moyens de pliage (3) et comprenant une paire de plaques de chauffage (4), lesdites plaques (4) de ladite paire étant disposées sur les côtés opposés dudit trajet de feuille pour chauffer linéairement les plis de la feuille composite (6), uniquement depuis le côté extérieur de cette feuille, pour souder par fusion les feuilles monocouches (60) seulement au niveau des plis.

4. Dispositif selon la revendication 3, dans lequel la profondeur des vallées, c'est-à-dire la hauteur des dents, des rouleaux (2) est égale à la largeur de pli entre une partie formant pli et une partie adjacente formant pli de la feuille composite soudée.
